Europäisches Patentamt

European Patent Office

Office européen des brevets

(19)

(11) Veröffentlichungsnummer: **0 169 309**
**B1**

(12)

# EUROPÄISCHE PATENTSCHRIFT

(45) Veröffentlichungstag der Patentschrift:
**26.07.89**

(51) Int. Cl.⁴: **F 16 K 27/00**

(21) Anmeldenummer: **85104211.9**

(22) Anmeldetag: **06.04.85**

(54) **Ventileinrichtung.**

(30) Priorität: **21.07.84 DE 3427033**

(43) Veröffentlichungstag der Anmeldung:
**29.01.86 Patentblatt 86/5**

(45) Bekanntmachung des Hinweises auf die Patenterteilung:
**26.07.89 Patentblatt 89/30**

(84) Benannte Vertragsstaaten:
**AT CH DE FR GB IT LI SE**

(56) Entgegenhaltungen:
**DE-A- 2 310 698**
**DE-B- 2 034 494**
**US-A- 3 540 693**
**US-A- 4 416 307**

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Ewald, Jürgen. Würzburger Strasse 14,
D-3014 Laatzen 1 (DE)
Erfinder: Meinking, Werner, im Brünfeld 11 A,
D-3016 Seelze 5 (DE)
Erfinder: Meyer-Brenken, Eberhard, Röddinger
Strasse 25, D-3008 Garbsen 1 (DE)
Erfinder: Schulz, Hans-Joachim, Gilborn 16,
D-3002 Wedemark (DE)
Erfinder: Stegemann, Gerhard, Alter Schulbrink 1,
D-3216 Salzhemmendorf (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

## Beschreibung

Die Erfindung betrifft eine Ventileinrichtung gemäss dem Oberbegriff des Patentanspruchs 1.

Aus der US-A 4 416 307 ist eine Ventileinrichtung bekannt, die im wesentlichen aus einem mehrteilig ausgebildeten Ventilgehäuse mit einem Druckmitteleingang, einem Druckmittelausgang und einem im Ventilgehäuse angeordneten Relaiskolben zur Betätigung eines ebenfalls im Ventilgehäuse angeordneten kombinierten Einlass- und Auslassventils besteht.

Wenigstens einer der Ventilsitze des kombinierten Einlass- und Auslassventils wird von dem Randbereich einer Ausnehmung gebildet, die in einer zwei Kammern voneinander trennenden Wand eines der Gehäuseteile vorgesehen ist.

Das Ventilgehäuse und der Relaiskolben sind aus Kunststoff gefertigt.

Bei aus Kunststoff gefertigten Ventilgehäusen kann das Problem auftreten, dass die z. B. durch Schrauben hergestellte Verbindung der Gehäuseteile sich im Laufe der Zeit lockert, da das Kunststoffmaterial, insbesondere im Bereich der Verbindungselemente, zu fliessen beginnt.

Der Erfindung liegt deshalb die Aufgabe zugrunde, eine Ventileinrichtung der eingangs genannten Art zu schaffen, die sich mit geringem Aufwand herstellen lässt und bei welcher mit einfachen Mitteln eine sichere Verbindung der Gehäuseteile ermöglicht wird.

Diese Aufgabe wird mit der im Patentanspruch 1 angegebenen Erfindung gelöst. Weiterbildungen und vorteilhafte Ausgestaltungen der Erfindung werden in den Unteransprüchen angegeben.

Die Erfindung bietet insbesondere den Vorteil, eine Ventileinrichtung zu erhalten, die einfach herstellbar ist und eine sichere spaltfreie Verbindung der Gehäuseteile miteinander ermöglicht.

Gemäss einer vorteilhaften Weiterbildung der Erfindung ist die die Druckmitteleingangskammer von der Druckmittelausgangskammer trennende Wand lösbar im Ventilgehäuse angeordnet. Durch diese Massnahme ist es möglich geworden, auf eine zusätzliche Montageöffnung für das kombinierte Einlass- und Auslassventil und somit auf ein z. B. als Gehäusedeckel ausgebildetes Gehäuseteil zum Verschliessen der Montageöffnung zu verzichten. Das Ventilgehäuse wird nur noch von zwei schalenartig ausgebildeten Gehäuseteilen gebildet.

Werden die Druckmittelanschlüsse der Ventileinrichtung mit metallenen Gewindeeinsätzen zur Befestigung von Druckmittelleitungen versehen, so sind die Wandung eines jeden einen Gewindeeinsatz aufnehmenden Druckmittelanschlusses und der zugehörige Gewindeeinsatz so ausgebildet und so zueinander angeordnet, dass die Dichtung zwischen der Kupplung der Druckmittelleitung und dem Druckmittelanschluss auf dem Spalt zwischen der Wandung des Druckmittelanschlusses und der Mantelfläche des Gewindeeinsatzes zu liegen kommt.

Aus der US-A 3 540 693 ist eine Ventileinrichtung bekannt, die ein Gehäuse mit zwei einander gegenüberliegenden Öffnungen aufweist, welche von je einem Deckel verschlossen werden. Das Gehäuse und die Deckel können bei dieser Ventileinrichtung aus Kunststoff gefertigt sein.

Im Gehäuse ist ein kugelförmiger Ventilkörper verdrehbar angeordnet. Zwischen jedem der beiden Deckel und dem Ventilkörper ist je ein Dichtelement angeordnet. Um sicherzustellen, dass auch nach längerem Betrieb die Dichtwirkung erhalten bleibt, ist jede der beiden Dichtungen unter Vorspannung zwischen dem Ventilkörper und dem zugeordneten Deckel gelagert.

Die Vorspannung wird dadurch erzeugt, dass jeder Deckel auf seiner der Öffnung zugewandten Seite eine Schräge aufweist, die so bemessen ist, dass der Deckel mit seinem den die Öffnung des Gehäuses abdeckenden Bereich um einen geringen Betrag in den Gehäuseinnenraum eintauchen kann.

Der die Öffnung abdeckende Bereich des Deckels drückt dabei die zugeordnete Dichtung gegen den Ventilkörper, derart, dass die Dichtung dabei elastisch verformt wird.

Treten nach längerem Betrieb der Ventileinrichtung Verschleisserscheinungen an den Dichtungen auf, so sind die Dichtungen bestrebt, ihre ursprüngliche Form wieder einzunehmen. Durch die vorstehende Massnahme wird erreicht, dass die Dichtungen sich selbsttätig nachstellen.

Eine derartige Ausbildung von Gehäuse und Deckel ist jedoch nur für den vorgenannten Zweck brauchbar, da bei dieser bekannten Ventileinrichtung lediglich die Dichtelemente vorgespannt werden können.

Eine spaltfreie Verbindung von Gehäuse und Deckel, d. h., eine Verbindung, bei der die einander zugewandten Flächen von Deckel und Gehäuse spaltfrei aneinander anliegen, wird bei dieser bekannten Ventileinrichtung nicht erreicht. Ganz im Gegenteil soll eine solche Verbindung sogar verhindert werden, da ansonsten ein Eintauchen eines Teiles des Deckels in Richtung auf den Gehäuseinnenraum zu und somit ein Vorspannen der Dichtung nicht möglich wäre.

Anhand der Zeichnung wird nachstehend ein Ausführungsbeispiel der Erfindung näher erläutert. Es zeigen:

Fig. 1 ein Relaisventil, dessen Gehäuse aus zwei aus Kunststoff gefertigen Gehäuseteilen besteht im Schnitt,

Fig. 2 zwei mittels Hohlnieten miteinander verbundene Gehäuseteile eines Relaisventils und

Fig. 3 einen in einem Druckmittelanschluss angeordneten Gewindeeinsatz mit einem Dichtring zum Abdichten des Spaltes zwischen Gewindeeinsatz und Druckmittelanschluss.

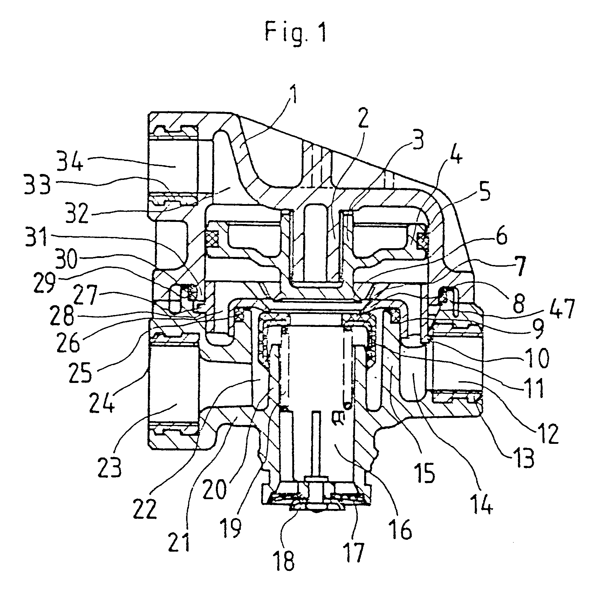

In Fig. 1 ist ein Relaisventil dargestellt, dessen Gehäuse sich aus zwei Gehäuseteilen 1 und 21 zusammensetzt. Die beiden Gehäuseteile 1, 21 bestehen aus Kunststoff und sind vorzugsweise als Kunststoffspritzteile hergestellt. Das erste Gehäuseteil 1 weist einen Steuereingang 34 auf, der mit einer Steuerkammer 32 verbunden ist.

Die Steuerkammer 32 wird von einem Relaiskolben 4 begrenzt, der vorteilhafterweise aus Kunststoff gefertigt ist. In einer Umfangsnut des Relaiskolbens 4 ist ein Dichtring 5 gelagert, welcher die Steuerkammer 32 gegen eine ebenfalls vom Relaiskolben 4 begrenzte, auf der anderen Seite des Relaiskolbens 4 liegende Druckmittelausgangskammer 14 abdichtet. Am Relaiskolben 4 ist ein zentrisch angeordneter, sich sowohl in die Steuerkammer 32 als auch in die Druckmittelausgangskammer 14 hineinerstreckender topfförmig ausgebildeter Vorsprung 3 vorgesehen. Der Boden des topfförmigen Vorsprungs 3 ist auf seiner der Druckmittelausgangskammer 14 zugewandten Seite als Auslassventilsitz 6 ausgebildet. Mit seiner offenen Seite ist der topfförmige Vorsprung 3 auf einen koaxial zu diesem angeordneten, sich in die Steuerkammer 32 hineinerstreckenden gehäusefesten Vorsprung 2 aufgeschoben. Der gehäusefeste Vorsprung 2 dient als zusätzliche Führung für den Relaiskolben 4, 3, um ein Verkanten des Relaiskolbens 4, 3 zu verhindern.

Im zweiten Gehäuseteil 21 ist eine Druckmitteleingangskammer 22 angeordnet, die über einen Druckmitteleingang 23 mit einem nicht dargestellten Druckmittelvorratsbehälter verbunden ist. Über ein vom Relaiskolben 4, 3 betätigbares kombiniertes Einlass- und Auslassventil ist die Druckmittelausgangskammer 14 mit der Druckmitteleingangskammer 22 bzw. mit der Atmosphäre verbindbar.

Das Einlassventil des kombinierten Einlass- und Auslassventils wird von einem Einlassventilsitz 8 und einem Ventilkörper 7, 11 gebildet, wobei der Ventilkörper 7, 11 sich aus einem topfförmig ausgebildeten, vorzugsweise aus Kunststoff gefertigten Träger 11 und einem auf diesen aufgebrachten Dichtkörper 7, der z.B. aus Gummi bestehen kann, zusammensetzt. Der Ventilkörper 7, 11 ist axial verschiebbar auf einem gehäusefesten ringförmigen Vorsprung 20 des zweiten Gehäuseteiles 21 gelagert, wobei der ringförmige Vorsprung 20 koaxial zum Einlassventilsitz 8 angeordnet ist. Eine sich an einem Vorsprung des zweiten Gehäuseteiles 21 abstützende Feder 19 beaufschlagt den Ventilkörper 7, 11 in Richtung auf den Einlassventilsitz 8 zu. Das Auslassventil 6, 7, 11 wird von dem Ventilkörper 7, 11 und dem Auslassventilsitz 6 gebildet. Der Einlassventilsitz 8 ist an einem ringförmig ausgebildeten Kunststoff-Formteil 9 angeordnet, welches eine zu der Druckmittelausgangskammer 14 hin offene Ringkammer 26 aufweist. Das den Einlassventilsitz 8 beinhaltende Kunststoff-Formteil 9 ist gleichzeitig als eine die Druckmitteleingangskammer 22 von der Druckmittelausgangskammer 14 trennende Wand ausgebildet. Mit seiner der Ringkammer 26 abgewandten Seite ist das Kunststoff-Formteil 9 auf eine die Druckmitteleingangskammer 22 begrenzende ringförmige Wandung 15 aufgeschoben. Mittels am Formteil 9 angeordneten, sich nach aussen in Richtung auf die Gehäusewandung zu erstreckenden Vorsprüngen 10, welche in entsprechenden Ausnehmungen der Gehäusewandung nach Art einer Schnappverbindung eingreifen, ist das mit dem Einlassventilsitz 8 versehene Kunststoff-Formteil 9 im Ventilgehäuse 1, 21 verankert. Vorzugsweise werden die Druckmittelanschlüsse des Gehäuses als Ausnehmungen für die Vorsprünge 10 des Formteils 9 benutzt. An dem dem Gehäuseinneren zugewandten Randbereich der Druckmittelanschlüsse 12 sind Abschrägungen 47 vorgesehen, die das Einführen des Formteils 9 in das Gehäuseteil 21 erleichtern. Zwischen der ringförmigen Wand 15 und dem Kunststoff-Formteil 9 ist ein Dichtring 25 angeordnet. Auf dem Umfang des Kunststoff-Formteiles 9 ist ein umlaufender Vorsprung 27 vorgesehen, welcher auf einer als Anschlag dienenden Abstufung 28 des Gehäuseteiles 21 aufliegt.

Im Boden des zweiten Gehäuseteiles 21 ist mittels einer Halterung 18 ein zur Atmosphäre hin in die Offenstellung bringbares Rückschlagventil 17 befestigt. Das Rückschlagventil 17 verhindert, dass Schmutz und Feuchtigkeit in den Ventilgehäuseinnenraum 16 gelangen.

Das erste Gehäuseteil 1 weist auf seiner dem zweiten Gehäuseteil 21 zugewandten Seite einen umlaufenden Vorsprung 31 auf, der mit einem am zweiten Gehäuseteil 21 angeordneten, dem ersten Gehäuseteil 1 zugewandten umlaufenden abgestuften Vorsprung 30 im montierten Zustand eine Nut begrenzt, in welcher ein Dichtring 29 gelagert ist. Der Dichtring 29 verhindert ein Austreten von Druckmittel aus dem Gehäuseinnenraum durch die Verbindungsstelle zwischen den beiden Gehäuseteilen 1, 21 zur Atmosphäre hin.

Um an dem Steuereingang 34, dem Druckmitteleingang 23 und dem Druckmittelausgang 12 Druckmittelleitungen anschliessen zu können, sind in diesen aus Metall bestehenden Gewindebuchsen 33, 24, 13 angeordnet.

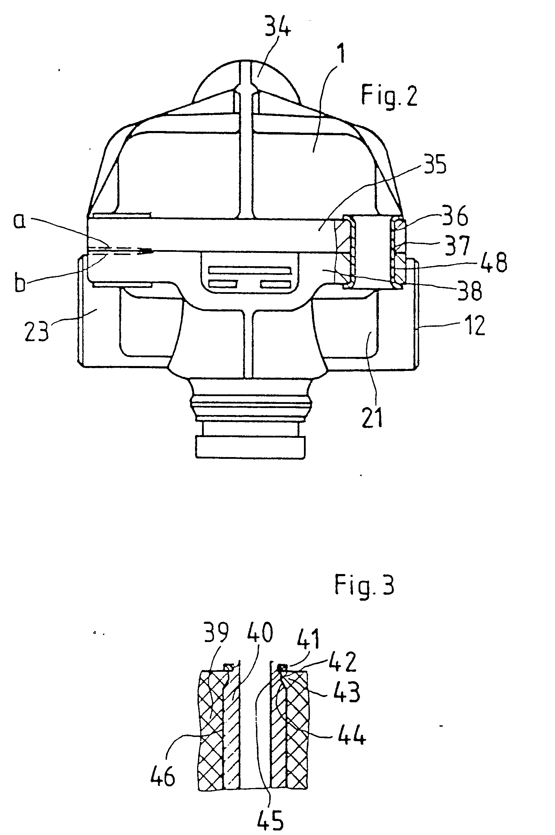

Die Gewindebuchsen weisen, wie in Fig. 3 dargestellt, an ihren zum äusseren Ende eines Druckmittelanschlusses 39 hinweisenden Endbereich eine in die Mantelfläche der Gewindebuchse 40 eingearbeitete Abstufung 44, 45 auf, in welche sich ein umlaufender Vorsprung 43 des Druckmittelanschlusses 39 hineinerstreckt. Die Abstufung 44, 45 der Gewindebuchse 40 ist so ausgebildet und so bemessen, dass bei Anordnung eines Dichtringes 41 zwischen dem Druckmittelanschluss 39 und einer Kupplung einer Druckmittelleitung der Spalt 42 zwischen der Wandung 46 des Druckmittelanschlusses 39 und dem abgestuften Teil 44, 45 der Gewindebuchse 40 auf dem mittleren Durchmesser des Dichtringes 41 zu liegen kommt, d. h. dass eine Stirnseite des Dichtringes 41 den Spalt 42 verschliesst.

Die Montage des im vorstehenden beschriebenen Relaisventils erfolgt in der Weise, dass in das untere Gehäuseteil 21 die Feder 19 eingelegt, der Ventilkörper 7, 11 auf die Feder 19 aufgesetzt und das den Einlassventilsitz 8 aufweisende Formteil 9 in Richtung auf den Ventilkörper 7, 11 und die Feder 19 zu auf die ringförmige Wandung 15 aufgeschoben wird, und zwar so weit, bis der Ventilkörper 7, 11 unter Vorspannung der Feder 19 am Ventilsitz 8 anliegt, der umlaufende Vorsprung 27 auf der als Anschlag dienenden Abstufung 28 des Gehäuseteiles 21 aufliegt und die Vorsprünge 10 des Formteiles 9 in die gleichzeitig als Ausnehmungen für die Vorsprünge 10 dienenden Druckmittelanschlüsse 12 des Gehäuseteiles 21 nach Art einer Schnappverbindung einrasten.

Vor der Montage des Formteiles 9 wird in eine Ausnehmung der ringförmigen Wandung 15 der Dichtring 25 eingelegt, welcher eine ungewollte Druckmittelverbindung zwischen der Druckmitteleingangskammer 22 und der Druckmittelausgangskammer 14 verhindert. Der mit dem Dichtring 5 versehene Relaiskolben 4, 3 wird mit seinem topfförmig ausgebildeten, zentrisch angeordneten Vorsprung 3 zum gehäusefesten Vorsprung 2 hin ausgerichtet in das erste Gehäuseteil 1 eingesetzt. Anschliessend werden das erste Gehäuseteil 1 und das vormontierte zweite Gehäuseteil 21 unter Zwischenschalten des Dichtringes 29 zusammengesetzt und mittels Hohlnieten miteinander verbunden.

Fig. 2 zeigt das im vorstehenden beschriebene Relaisventil im zusammengebauten Zustand. Der besseren Übersicht halber sind die den in Fig. 1 gezeigten Bauteilen gleichen Bauteile mit gleichen Bezugszeichen versehen.

Das mit dem Steueranschluss 34 versehene erste Gehäuseteil 1 und das den Druckmitteleingang sowie dem Druckmittelausgang 12 aufweisende zweite Gehäuseteil 21 besitzen Befestigungsflansche 35 bzw. 38. Die einander zugewandten Flächen a und b der beiden Gehäuseteile 1 und 21 sind gewölbt ausgebildet (gestrichelte Linien a, b). In den Flanschen 35, 38 der beiden Gehäuseteile 1, 21 sind in Richtung der Längsachse des Gehäuses 1, 21 verlaufende Ausnehmungen 36 bzw. 48 zur Aufnahme von Verbindungselementen 37 vorgesehen.

Werden, wie in diesem Ausführungsbeispiel dargestellt, als Verbindungselemente Hohlniete 37 genommen, so können durch diese Schrauben zur Befestigung des Relaisventils an einem Träger hindurchgeführt werden. Die Verwendung von Hohlnieten als Verbindungs- und Halteelement bietet den Vorteil, dass bei der Befestigung des Relaisventils an einem Träger die von den Schrauben ausgeübten Kräfte nicht auf das Ventilgehäuse 1, 21, sondern lediglich auf die Hohlniete 37 übertragen werden, so dass keine zusätzlichen Spannungen an den Gehäuseteilen 1, 21 und den Flanschen 35, 38 auftreten können.

Die Wölbung der Fläche a und die Wölbung der Fläche b an den einander zugewandten Seiten der beiden Gehäuseteile 1, 21 bewirken, dass die Gehäuseteile 1, 21 bei der Montage unter Vorspannung zusammengefügt werden. Später auftretende Veränderungen (Fliessen des Kunststoffes) des Materials, insbesondere im Bereich der Verbindungsstellen der beiden Gehäuseteile 1, 21, können bedingt durch diese Vorspannung nicht zum ungewollten Lösen der Verbindungselemente und zur Spaltbildung an der Nahtstelle zwischen den Gehäuseteilen 1, 21 führen.

Es reicht selbstverständlich auch aus, wenn lediglich eine der Flächen a bzw. b gewölbt ausgebildet ist, so dass bei Verbindung der beiden Gehäuseteile mittels Verbindungselementen durch elastische Verformung die gewünschte Vorspannung erzeugt wird.

## Patentansprüche

1. Ventileinrichtung mit einem aus wenigstens zwei Gehäuseteilen (1, 21) bestehenden Ventilgehäuse, wobei die Gehäuseteile (1, 21) aus Kunststoff bestehen, und wobei die einander zugewandten Seiten der Gehäuseteile (1, 21) Flächen (a, b) aufweisen, die bei der Montage des Ventilgehäuses (1, 21) aneinander zu Anlage bringbar sind, dadurch gekennzeichnet, dass die Fläche (a, b) wenigstens eines der beiden Gehäuseteile (1, 21) gewölbt ausgebildet ist, derart, dass beim Verbinden der Gehäuseteile (1, 21) mittels Verbindungselementen (37) eine durch elastische Verformung wenigstens eines Gehäuseteiles (1, 21) erzeugte Vorspannung entsteht, wodurch erreicht wird, dass ein Lockern der Verbindungselemente (37) nicht auftritt.

2. Ventileinrichtung nach Anspruch 1, dadurch gekennzeichnet, dass die Flächen (a, b) der einander zugewandten Seiten jedes der Gehäuseteile (1, 21) gewölbt ausgebildet sind.

3. Ventileinrichtung nach wenigstens einem der vorhergehenden Ansprüche, gekennzeichnet durch die folgenden Merkmale:
a) Die Gehäuseteile (1, 21) weisen an ihren einander zugewandten Seiten Flansche (35, 38) auf;
b) Die Flansche (35, 38) sind gewölbt ausgebildet.

4. Ventileinrichtung nach Anspruch 1, dadurch gekennzeichnet, dass als Verbindungsmittel für die Gehäuseteile (1, 21) Hohlniete (37) vorgesehen sind.

5. Ventileinrichtung nach Anspruch 1 mit mehreren Druckmittelanschlüssen, gekennzeichnet durch die folgenden Merkmale:
a) wenigstens eines der Gehäuseteile (1, 21) weist wenigstens einen Druckmittelanschluss (39) mit einem Gewindeeinsatz (40) auf;
b) der Gewindeeinsatz (40) weist eine in Umfangsrichtung verlaufende Ausnehmung (45, 44) auf;
c) der Druckmittelanschluss (39) besitzt in seinem offenen Randbereich einen sich in die Ausnehmung (44, 45) des Gewindeeinsatzes (40) hineinerstreckenden umlaufenden Vorsprung (43), der so bemessen ist, dass ein Dichtring (41), welcher zur Abdichtung einer Druckmittelleitungskupplung gegen den Druckmittelanschluss (39) dient, mit seinem mittleren Durchmesser auf dem Spalt (42) zwischen der Wandung des Druckmittelanschlusses (39) und der Mantelfläche des Gewindeeinsatzes (40) liegt.

6. Ventileinrichtung nach Anspruch 1, dadurch gekennzeichnet, dass in wenigstens einem der Gehäuseteile (1, 21) eine mit einem Ventilsitz (8) für ein Ventil versehene Wand (9) vorgesehen ist, welche eine Druckmitteleingangskammer (22) von einer Druckmittelausgangskammer (14) trennt, wobei die Wand (9) lösbar in einem der beiden Gehäuseteile (1, 21) angeordnet ist.

7. Ventileinrichtung nach Anspruch 6, dadurch gekennzeichnet, dass an der Wand (9) Vorsprünge (10) vorgesehen sind, welche in entsprechende Ausnehmungen (12) wenigstens eines der Gehäuseteile (1, 21) nach Art einer Schnappverbindung einrasten.

8. Ventileinrichtung nach Anspruch 7, dadurch gekennzeichnet, dass die Ausnehmungen zur Aufnahme der Vorsprünge (10) von Druckmittelanschlüssen (12) wenigstens eines der Gehäuseteile (1, 21) gebildet werden.

9. Ventileinrichtung nach wenigstens einem der vorhergehenden Ansprüche, dadurch gekennzeichnet, dass die Wand (9) einen umlaufenden Vorsprung (27) aufweist, welcher an einem in wenigstens einem der Gehäuseteile (1, 21) vorgesehenen als Anschlag dienenden Abstufung (28) zur Anlage bringbar ist.

## Claims

1. Valve device with a valve housing consisting of at least two housing parts (1, 21), the housing parts (1, 21) consisting of plastics material, and the sides, facing each other, of the housing parts (1, 21) having surfaces (a, b) which can be brought to bear on each other during the assembly of the valve housing (1, 21), characterised in that the surface (a, b) of at least one of the two housing parts (1, 21) is dished, so that when the housing parts (1, 21) are connected by means of connecting elements (37) a pre-tension is produced by means of elastic deformation of at least one housing part (1, 21), achieving the result that loosening of the connecting elements (37) does not take place.

2. Valve device according to Claim 1, characterised in that the surfaces (a, b) of the sides, facing each other, of each of the housing parts (1, 21) are dished.

3. Valve device according to at least one of the preceding Claims, characterised by the following features:
a) the housing parts (1, 21) have flanges (35, 38) on their sides facing each other;
b) the flanges (35, 38) are dished.

4. Valve device according to Claim 1, characterised in that hollow rivets (37) are provided as connecting means for the housing parts (1, 21).

5. Valve device according to Claim 1 with several pressure medium connections, characterised by the following features:
a) at least one of the housing parts (1, 21) has at least one pressure medium connection (39) with a threaded insert (40);
b) the threaded insert (40) has a circumferential recess (45, 44);
c) the pressure medium connection (39) has in its open edge region a circumferential projection (43) which extends into the recess (44, 45) in the threaded insert (40) and which is of such dimensions that a sealing ring (41) which serves to seal a pressure medium line coupling to the pressure medium connection (39) bears at its middle diameter against the gap (42) between the wall of the pressure medium connection (39) and the outer surface of the threaded insert (40).

6. Valve device according to Claim 1, characterised in that in at least one of the housing parts (1, 21) a wall (9) is provided which has a valve seat (8) for a valve and separates a pressure medium inlet chamber (22) from a pressure medium outlet chamber (14), the wall (9) being detachably arranged in one of the two housing parts (1, 21).

7. Valve device according to Claim 6, characterised in that on the wall (9) projections (10) are provided which engage in the manner of a snap fastener in corresponding recesses (12) of at least one of the housing parts (1, 21).

8. Valve device according to Claim 7, characterised in that the recesses to receive the projections (10) are formed by pressure medium connections (12) of at least one of the housing parts (1, 21).

9. Valve device according to at least one of the preceding Claims, characterised in that the wall (9) has a circumferential projection (27) which can be brought to bear against a shoulder (28) provided in at least one of the housing parts (1, 21) and serving as a stop.

## Revendications

1. Dispositif de soupape comprenant un boîtier de soupape composé d'au moins deux parties de boîtier (1, 21), dans lequel les parties (1, 21) du boîtier sont faites de matière plastique et les faces des parties (1, 21) du boîtier qui sont dirigées l'une vers l'autre présentent des surfaces (a, b) qui peuvent être mise en contact l'une avec l'autre lors du montage du boîtier (1, 21), caractérisé en ce que la surface (a, b) d'au moins une des deux parties (1, 21) du boîtier est de configuration bombée de telle manière que, lorsqu'on assemble les parties (1, 21) du boîtier au moyen d'éléments d'assemblage (37), il s'exerce une précontrainte produite par une déformation élastique d'au moins une partie (1, 21) du boîtier, grâce à laquelle il ne se produit pas de desserrage des éléments d'assemblage (37).

2. Dispositif de soupape selon la revendication 1, caractérisé en ce que les surfaces (a, b) des faces des deux parties (1, 21) du boîtier qui sont dirigées l'une vers l'autre sont de configuration bombée.

3. Dispositif de soupape selon au moins une des revendications précédentes, caractérisé par les traits caractéristiques suivants:
a) les parties (1, 21) du boîtier présentent des brides (35, 38) sur leurs faces dirigées l'une vers l'autre;
b) les brides (35, 38) sont de configuration bombée.

4. Dispositif de soupape selon la revendication 1, caractérisé en ce qu'il est prévu des rivets tubulaires (37) en qualité d'éléments d'assemblage pour les parties (1, 21) du boîtier.

5. Dispositif de soupape selon la revendication 1, comportant plusieurs orifices de raccordement de fluide de pression, caractérisé par les traits caractéristiques suivants:

a) au moins l'une des parties (1, 21) du boîtier présente au moins un orifice de raccordement de fluide de pression (39) muni d'une insertion filetée (40);

b) l'insertion filetée (40) présente un évidement (45, 44) s'étendant dans la direction circonférentielle;

c) l'orifice de raccordement de fluide de pression (39) possède, dans sa région de bord ouverte, une saillie (43) circonférentielle qui s'engage dans l'évidement (44, 45) de l'insertion filetée (40), et qui est dimensionnée de manière qu'une bague d'étanchéité (41) qui sert à former un joint étanche entre un raccord de conduite de fluide sous pression et l'orifice de raccordement de fluide de pression (39), soit en appui, par sa circonférence médiane, sur la fente (42) entre la parois de l'orifice de raccordement de fluide de pression (39) et la surface latérale de l'insertion filetée (40).

6. Dispositif de soupape selon la revendication 1, caractérisé en ce que, dans au moins l'une des parties (1, 21) du boîtier, est prévue une cloison (9) munie d'un siège de soupape (8) pour une soupape, et qui sépare une chambre d'entrée de fluide de pression (22) d'une chambre de sortie de fluide de pression (14), la cloison (9) étant agencée de façon démontable dans l'une des deux parties (1, 21) du boîtier.

7. Dispositif de soupape selon la revendication 6, caractérisé en ce que, sur la cloison (9) sont prévues des saillies (10) qui se verrouillent à la façon d'un assemblage à encliquetage dans des évidements correspondants (12) d'au moins une des parties (1, 21) du boîtier.

8. Dispositif de soupape selon la revendication 7, caractérisé en ce que les évidements destinés à recevoir des saillies (10) sont formés par des saillies (10) d'orifices de raccordement de fluide de pression (12) d'au moins une des parties (1, 21) du boîtier.

9. Dispositif de soupape selon au moins une des revendications précédentes, caractérisé en ce que la cloison (9) présente une saillie circonférentielle (27) qui peut être mise en appui contre un épaulement (28) servant de butée, qui est prévue dans au moins une des parties (1, 21) du boîtier.

Fig. 1

Fig. 2

Fig. 3